# EUROPÄISCHE PATENTANMELDUNG

(11) **EP 1 935 756 A1**
(43) Veröffentlichungstag der Anmeldung: **25.06.2008**
(21) Anmeldenummer: 07123425.6
(22) Anmeldetag: 18.12.2007
(51) Int. Cl.: B62D 5/04

(54) **Lenkhilfsantrieb für eine Lenkeinrichtung eines Kraftfahrzeugs mit einer verbesserten Aufnahme eines Zugmittelgetriebes**

(30) Priorität: 20.12.2006 DE 102006060239; 19.12.2006 DE 102006059948
(71) Anmelder: ZF-Lenksysteme GmbH, 73527 Schwäbisch Gmünd (DE)
(72) Erfinder: Hauck, Michael, 73630, Remshalden (DE); Budaker, Martin, 73540, Heubach (DE); Stöckle, Mario, 73525, Schwäbisch Gmünd (DE); Beck, Detlef, 73571, Göggingen (DE)

(57) **Zusammenfassung**

Lenkhilfsantrieb (1) für eine Lenkeinrichtung eines Kraftfahrzeugs mit einem Motor (2), der eine Motorwelle (4) antreibt, die mit wenigstens einem Drehübertragungsglied (6) antreibend gekoppelt ist, wobei dieses mit einer Abtriebswelle (8) antreibend gekoppelt ist und wobei das Drehübertragungsglied (6) in einem Gehäuse (9) des Lenkhilfsantriebes (1) aufgenommen ist, wobei ein als mehrstufiges Zugmittelgetriebe, vorzugsweise als zweistufiges Zahnriemengetriebe ausgebildetes Riemengetriebe, zur Kopplung zwischen der Motorwelle (4) und dem Drehübertragungsglied (6) und zwischen diesem und der Abtriebswelle (8) vorgesehen ist, und wobei zur Aufnahme des Drehübertragungsgliedes (6) im Gehäuse (9) wenigstens ein konzentrisch zu einer Zwischenachse (5) angeordnetes Aufnahmemittel mit einem gehäuseaußenseitig bedienbaren Fixierelement (11) vorgesehen ist, mittels dessen das Drehübertragungsglied (6) in wenigstens einer parallel zur Zwischenachse (5) versetzbaren Position am Gehäuse (9) einstellbar bzw. befestigbar ist.

## Beschreibung

Die vorliegende Erfindung betrifft einen Lenkhilfsantrieb für eine Lenkeinrichtung eines Kraftfahrzeugs zu Lenkkraftunterstützung mit einem Motor, der eine Motorwelle antreibt, die mit wenigstens einem Drehübertragungsglied antreibend gekoppelt ist, wobei dieses mit einer Abtriebswelle antreibend gekoppelt ist und wobei das Drehübertragungsglied in einem Gehäuse des Lenkhilfsantriebs aufgenommen ist. Die Erfindung richtet sich insbesondere auf Lenkhilfsantriebe nach der Art der so genannten EPS-Hilfsantriebe, welche elektrisch angetriebene Systeme betreffen und die motorische Kraft zur Lenkkraftunterstützung nutzen, welche mittels eines Getriebes übertragen wird.

Aus der Offenlegungsschrift DE 10 2004 059 461 A1 ist eine gattungsgemäße Lenkeinrichtung mit einem Lenkhilfsantrieb bekannt. Diese umfasst einen Motor zur Lenkkraftunterstützung, wobei die Lenkungseinrichtung ferner eine Lenksäule umfasst. Dabei wird vorgeschlagen, dass der Motor und die Lenksäule parallel oder koaxial zueinander angeordnet werden. Ferner ist aus der Offenlegungsschrift bekannt, dass zwischen der Motorwelle und der Abtriebswelle zumindest eine Zwischenachse angeordnet ist, auf der ein Drehübertragungsglied drehbar aufgenommen ist, welches dazu dient, das erreichbare Untersetzungsverhältnis zwischen der Drehzahl der Motorwelle und der Drehzahl der Abtriebswelle zu erhöhen. Die Abtriebswelle ist dabei als Lenksäule der Lenkung oder die Eingangswelle eines Lenkgetriebes oder die Lenkstange selbst ausgeführt. Das vom Motor aufgebrachte Drehmoment wird daher auf die Lenkstange übertragen, so dass die notwendige Lenkkraft, die über das Lenkrad in die Lenkeinrichtung eingebracht werden muss, reduziert wird. Mittels des Drehübertragungsgliedes auf der Zwischenachse kann ein Riementrieb realisiert werden, mittels dessen in der ersten Übertragungsstufe zwischen der Motorwelle und dem Drehübertragungsglied eine erste Untersetzung auf das Drehübertragungsglied geschaffen wird, wobei in der zweiten Übertragungsstufe zwischen dem Drehübertragungsglied und der Abtriebswelle eine weitere Untersetzung erreichbar ist. Daher weist das Drehübertragungsglied zwei Riemenscheibenabschnitte auf, welche unterschiedliche Durchmesser haben.

Aus der Offenlegungsschrift DE 103 04 189 A1 ist weiterhin bekannt, einen Mechanismus zum Spannen eines Riemens vorzusehen. Dies ist notwendig, da der Riemen bei der Montage gespannt werden muss und während des Betriebes eine Riemenvorspannung beibehalten muss, wozu häufig Mittel vorgesehen werden müssen, die die dauerhafte Riemenvorspannung gewährleisten. In der Offenlegungsschrift werden verschiedene Ausführungsformen beschrieben, welche eine Veränderung des Abstandes zwischen der Motorachse und der Abtriebsachse ermöglichen. Jedoch betrifft der Lenkhilfsantrieb lediglich einen einstufigen Riementrieb, so dass die Änderung des Achsabstandes durch eine variabel befestigbare Motorwelle mittels eines Schlittens vorgeschlagen wird. Der Schlitten kann mit einem Schraubenelement im Gehäuse des Lenkhilfsantriebes in der Trumrichtung des Riemens den Riemen spannen bzw. entspannen.

Bei derartigen Anordnungen von Lenkhilfsantrieben, die die Drehbewegung von einer Motorwelle auf eine Abtriebswelle mittels eines Riementriebes übertragen, entsteht das Problem, dass ein einfaches, zuverlässiges und dauerhaftes Spannen des Riemens mittels einer Veränderung der Achsabstände zwischen der Motorwelle, der Zwischenachse sowie der Abtriebswelle sehr aufwendig ist. Es ist bekannt, die Lage der Zwischenachse relativ zur Motorwelle und auch relativ zur Abtriebswelle zu verändern, um sowohl die Spannung des Riemens zwischen der Motorachse und der Zwischenachse als auch die Spannung des Riemens zwischen der Zwischenachse und der Abtriebsachse zu verändern. Hierzu soll ein Verschiebewerkzeug am Drehübertragungsglied und/oder dessen Aufnahmemittel angewendet werden, um die Riemen insbesondere durch Aufbringen einer definierten Verstellkraft in eine definierte Kraftrichtung zu spannen. Dabei ist der Lenkhilfsantrieb selbst ohne die Wellenverschiebeeinrichtung ausgebildet. Es sind lediglich Fixiermittel vorgesehen, um die Zwischenachse mit gewünschtem Radialabstand zu der Motorwelle und zu der Abtriebswelle unverschiebbar zu sichern. Jedoch gestaltet sich die konstruktive Ausführung der Sicherung der Zwischenachse als sehr schwierig. Hinzu kommt, dass die Zugänglichkeit zu den Riemen häufig eingeschränkt ist, wobei auch die Zugänglichkeit zur Zwischenachse häufig nur bei geöffnetem Gehäuse des Lenkhilfsantriebs möglich ist.

Es ist daher die Aufgabe der vorliegenden Erfindung, einen Lenkhilfsantrieb für eine Lenkeinrichtung zu schaffen, welcher eine vereinfachte Anordnung und Lagerung des Drehübertragungsgliedes aufweist und ein einfaches Spannen und Sichern der Riemen ermöglicht.

Diese Aufgabe wird von einem Lenkhilfsantrieb für eine Lenkeinrichtung mit den Merkmalen des Anspruchs 1 gelöst. Vorteilhafte Weiterbildungen der Erfindung sind in den abhängigen Ansprüchen angegeben.

Die Erfindung schließt die technische Lehre ein, dass zur Aufnahme des Drehübertragungsgliedes im Gehäuse wenigstens ein konzentrisch zur Zwischenachse angeordnetes Aufnahmemittel mit einem gehäuseaußenseitig bedienbaren Fixierelement vorgesehen ist, mittels dessen das Drehübertragungsglied in wenigstens einer parallel zur Zwischenachse versetzbaren Position über das Aufnahmemittel am Gehäuse befestigbar bzw. einstellbar ist.

Die Erfindung geht dabei von dem Gedanken aus, eine einfache Aufnahme des Drehübertragungsgliedes im Gehäuse zu schaffen, welche von außen bedienbar ist, so dass das Drehübertragungsglied durch Relativbewegungen sowohl zur Motorwelle als auch zur Abtriebswelle in wenigstens einer Richtung bewegt werden kann, um diese nach Erreichen der gewünschten Position am Gehäuse zu befestigen. Eine gehäuseaußenseitige Bedienung wird erfindungsgemäß dadurch erreicht, dass das Drehübertragungsglied mittels eines Aufnahmemittels innerhalb des Gehäuses aufgenommen wird und mittels eines Fixierelements, beispielsweise eines Konterelementes, welches gegen das Aufnahmemittel gekontert wird, von der Gehäuseaußenseite fixiert wird.

Die Lagefixierung der Zwischenachse im Gehäuse kann alternativ mittels eines von außen vorgenommenen Schweißvorgangs endgültig festgelegt werden, wobei diese im nachträglichen Eingriff nicht mehr verändert werden kann. Ferner kann alternativ ein Umbiegen von Blechteilen oder das Verklemmen oder Verschrauben in der gewünschten Position zur Lagefixierung vorgesehen sein.

Der Lenkhilfsantrieb kann sowohl ein Drehübertragungsglied auf einer Zwischenachse umfassen, wobei auch Konstruktionen möglich sind, bei denen mehrere Drehübertragungsglieder auf mehreren Zwischenachsen angeordnet sind, um ein erweitertes Untersetzungsverhältnis zwischen der Drehzahl der Motorwelle und der Drehzahl der Abtriebswelle zu schaffen.

Vorteilhaft ist es, dass die antreibende Kopplung zwischen der Motorwelle und dem Drehübertragungsglied und zwischen diesem und der Abtriebswelle als Zugmittelgetriebe nach Art eines Ketten- oder Riementriebes mit jeweiligen Zugmitteln ausgebildet ist. Die Zugmittel können Ketten oder Riemen sein, wobei insbesondere Zahnriemen eine bevorzugte Ausführungsform bilden. Das Getriebe kann ein- oder mehrstufig vorzugsweise zweistufig ausgeführt sein, sodass auch mehrere Drehübertragungsglieder aufeinander folgend in Reihe antreibend miteinander gekoppelt sind, um besonders große Untersetzungsverhältnisse zu realisieren.

Mit der erfindungsgemäßen Lösung wird ein einfaches Konzept der Aufnahme des Drehübertragungsgliedes im Gehäuse geschaffen, wobei die Komponenten einfach und kostengünstig herstellbar sind. Es ergibt sich ein montagefreundliches Konzept, welches insbesondere eine einfache Einstellung der Position der Zwischenachse relativ zur Motorachse bzw. zur Abtriebsachse ermöglicht. Ferner ist ein Einstellen der Position nur während der Montage durch eine Montageeinrichtung notwendig, so dass die Montageeinrichtung nur einmalig zur Verfügung gestellt werden muss, um eine Vielzahl von Lenkhilfsantrieben einzurichten. Damit sind keine zusätzlichen Komponenten im Konzept des Lenkhilfsantriebs selbst notwendig, welche beispielsweise Exzenter, Federn oder Einstellschrauben umfassen. Im Ergebnis ist ein minimaler Aufwand bezüglich der Verbindungselemente und Verbindungsprozesse erreichbar, so dass weitgehend auf Passungen verzichtet werden kann. Ferner sind die bewegten Teile auf das Drehübertragungsglied selbst beschränkt, so dass aufgrund der geringen Massenträgheiten eine optimale Regelung und Lenkdynamik erzielbar ist.

Gemäß einer vorteilhaften Ausführungsform der Erfindung sind die Motorachse, die Zwischenachse und die Abtriebsachse in einer Dreiecksposition zueinander angeordnet, so dass mit der versetzbaren Position des Aufnahmemittels zur Aufnahme des Drehübertragungsgliedes am Gehäuse eine Entfernungsänderung der Zwischenachse sowohl zur Motorachse als auch zur Abtriebsachse ermöglicht ist. Die Bewegung der Zwischenachse zur Einstellung der jeweiligen Entfernungen zur Abtriebsachse und zur Motorachse kann daher in einer Richtung erfolgen, welche innerhalb des sich sowohl zur Motorachse als auch zur Abtriebsachse einschließenden Winkelbereichs liegt. Das Drehübertragungsglied steht dabei sowohl mit der Motorwelle als auch mit der Abtriebswelle vorzugsweise über einen Riementrieb, und besonders bevorzugt über einen Zahnriemen in Verbindung. Die relative Verstellung der Zwischenachse zur Motorachse bzw. zur Abtriebsachse dient daher der Einstellung der gewünschten Riemenvorspannung.

Vorteilhafterweise ist das Aufnahmemittel als Achselement ausgeführt, welches für eine gehäusefeste Anordnung mit dem Konterelement verschraubbar ist, wobei das Drehübertragungsglied drehbar gelagert auf dem Achselement aufgenommen ist. Damit wird eine erste mögliche Ausführungsform des Aufnahmemittels aufgezeigt, wobei das Drehübertragungsglied beispielsweise mittels einer Lageranordnung drehbar auf dem Aufnahmemittel befestigt ist. Das Achselement ist in Form einer Achse ausgeführt, welche zumindest einseitig mit dem Konterelement verbindbar ist, wobei die Verbindung über einen Gewindeabschnitt erfolgen kann, welcher sich durch die Wandung des Gehäuses nach außen erstreckt. Außenseitig kann daher das Konterelement auf dem Gewindeabschnitt aufgeschraubt und mit dem Achselement verspannt werden. Das Durchgangsloch im Gehäuse weist dabei einen größeren Durchmesser auf als der Gehäusedurchgangsabschnitt, so dass das gebildete Radialspiel die parallel zur Zwischenachse versetzbare Anordnung des Aufnahmemittels am Gehäuse ermöglicht. Erst damit ist eine Einstellung in der Radialebene des Aufnahmemittels im Gehäuse gewährleistet. Gemäß einer weiteren Ausführungsform der Erfindung wird vorgeschlagen, dass das Drehübertragungsglied als Doppelriemenrad ausgebildet ist, durch welches sich das Achselement hindurch erstreckt, wobei die antreibende Kopplung des Drehübertragungsgliedes sowohl zur Motorwelle als auch zur Abtriebswelle einen Riementrieb aufweist. Das Doppelriemenrad umfasst eine große und eine kleine Riemenscheibe, wobei die große Riemenscheibe mit der Motorwelle gekoppelt ist und die kleine Riemenscheibe mit der Abtriebswelle gekoppelt ist.

Eine vorteilhafte Ausführungsform der Erfindung sieht vor, dass das Achselement zum Ausgleich axialer Toleranzen mehrteilig ausgebildet ist. Dadurch wird sichergestellt, dass sich die Anordnung in einem geschlossenen Gehäuse verschieben lässt ohne zu klemmen.

In einer weiteren vorteilhaften Ausführungsform ist das Drehübertragungsglied in zumindest einem Aufnahmemittel gelagert, welches als gehäusefeste Lagerung oder als Lagerhülse ausgestaltet ist. Damit wird eine weitere Ausführungsform des Aufnahmemittels aufgezeigt, wobei das Drehübertragungsglied nur noch endseitig in der Lagerhülse gelagert ist, und sich somit das Aufnahmemittel nicht in Form einer Achse durch das Drehübertragungsglied selbst hindurch erstreckt. Dafür umfasst das Drehübertragungsglied wenigstens eine Anformung zur Bildung einer Lageranordnung, um eine Lagerung in der Lagerhülse zu bilden. Die Lagerhülse wird dabei auf bereits beschriebene Weise nach Erreichen der gewünschten Position der Zwischenachse mit dem Konterelement in der Wandung des Gehäuses befestigt.

Damit kann das Aufnahmemittel sowohl als feststehende Achse ausgeführt sein, worauf das Drehübertragungsglied rotierend gelagert ist, und wobei gemäß der zweiten Ausführungsform das Drehübertragungsglied eine externe Lagerung aufweist, und die externe Lagerung außerhalb der Ebenen der Riemenscheiben angeordnet ist.

Zur Erhöhung der Stabilität kann vorgesehen sein, dass das als Achse ausgebildete Drehübertragungsglied durch zwei Aufnahmemittel am Gehäuse aufgenommen ist, welche in Richtung der Zwischenachse beiderseitig des Drehübertragungsgliedes angeordnet sind. Damit wird eine Verbesserung der Stabilität der Lagerung des Drehübertragungsgliedes erreicht, wobei vorgesehen sein kann, dass zur Befestigung des Aufnahmemittels dieses im Gehäuse vorzugsweise axial verspannt bzw. angeschraubt wird, wobei auch ein Einpressen, Verklemmen, Anschweißen, Löten, Einformen, Nieten, ein Umbiegen von Blechteilen oder ein Kleben eine mögliche Befestigungsvariante darstellt. Dabei ist vorzugsweise eine Befestigung in nur der Wandung des Gehäuses anzustreben, ohne das Gesamtsystem des Lenkhilfsantriebs zu verspannen. So kann vermieden werden, dass beispielsweise zwei sich gegenüberliegende Wandungen des Gehäuses gegeneinander verspannt werden, wodurch sich unzulässige Verformungen im Gehäuse bilden können. In Abhängigkeit von der Notwendigkeit des Erhaltes der Einstellung der Riemenvorspannung durch die gewünschte Position der Zwischenachse im Gehäuse kann eine zusätzliche Sicherung der Befestigung erfolgen, wobei die zusätzliche Sicherung beispielsweise Designelemente wie Spitzen, Kerben oder Rippen umfassen kann, wobei auch Prozesse wie ein Anschweißen, Verstemmen oder ein Einsetzen von zusätzlichen Bauteilen wie Schrauben, Federringen, etc. vorgesehen sein können.

Gemäß einer weiteren vorteilhaften Ausführungsform ist das Aufnahmemittel als Teil des Gehäuses ausgebildet, mittels dessen das Drehübertragungsglied in wenigstens einer parallel zur Zwischenachse versetzbaren Position am restlichen Gehäuse, welches wenigstens den Motor und die Abtriebsachse aufnimmt, befestigbar ist. Dabei wird der Gedanke verfolgt, das Aufnahmemittel einteilig mit wenigstens einem Teil des Gehäuses auszubilden, welches mit dem übrigen Gehäuse des Lenkhilfsantriebs die vollständige Einkapselung der Komponenten des Lenkhilfsantriebs bildet. Die Verspannung des Aufnahmemittels mit dem Fixierlelement erfolgt dabei nicht zwangsläufig konzentrisch mit dem Aufnahmemittel, so dass das Fixierelement auch außerhalb der Zwischenachse angeordnet sein kann.

Bei der beiderseitigen Befestigung des als Achse ausgebildeten Drehübertragungsgliedes durch mehrere Aufnahmemittel erfolgt die Einstellung der Position der Zwischenachse während bzw. nach der Montage der Gehäusekonstruktion. Für eine Einstellung muss die wenigstens eine Zwischenachse in der Gehäusekonstruktion beweglich angeordnet sein. Dies kann durch entsprechende Gestaltung der gesamten Bauteile gewährleistet sein, so dass beispielsweise mindestens ein axial verschiebbarer Teil der Zwischenachse wie eine Buchse, ggf. in Verbindung mit einem elastischen Element vorgesehen ist, welches beim Einstellprozess einen axialen Spalt zur gegenüberliegenden Gehäusekomponente aufweist und nach der endgültigen Befestigung an der Gehäusekomponente anliegt.

Vorteilhafterweise ist das Drehübertragungsglied, beispielsweise ein Doppelriemenrad auf dem Achselement, mittels einer Lageranordnung drehbar gelagert, welche zwei Lagerstellen aufweist, die als Festlager/Loslager-Kombination oder als zwei Loslager (schwimmende Anordnung) oder als zwei Stützlager ausgebildet sind.

Das Drehübertragungsglied kann ein- oder mehrteilig sein, wobei die Gesamtkomponente sowie die Einzelkomponenten aus metallischen Imformteilen, z.b. Tiefzeihen, aus einem Sintermaterial, aus einem Kunststoff wie einem Duroplast und/oder einem Thermoplast oder aus einer Zwei-/x-K-Komponente aus Kunststoff mit einem verstärkten metallischen Insert gebildet sein, wobei zur Herstellung auch ein Gießprozess oder ein Strangpressprozess herangezogen werden kann. Die Einzelkomponenten können beispielsweise durch ein Aufpressen, Aufspritzen, Verschweißen, Löten, ein Einformen oder ein Kleben miteinander verbunden sein. Auch kann das Doppelriemenrad einen als Kunststoffteil gefertigten Riemenscheibenabschnitt umfassen, wobei mittels eines Spritzgussverfahrens auf den als Metallbauteil ausgebildeten kleinen Riemenscheibenabschnitt ein Riemenscheibenabschnitt aufgespritzt wird, welcher den größeren Durchmesser bildet.

Eine weitere Variante kann darin bestehen, dass der große Riemenscheibenabschnitt als metallischer, umgeformter oder urgeformter Körper zum aufpressen ausgebildet ist. Alternativ kann der große Riemenscheibenabschnitt metallisch sein und als Kunststoffteil aufgebrachte Verzahnungen aufweisen. Ferner können eingeschliffene Lagerlaufbahnen integriert sein. Auch können Teile des Doppelriemenrad, speziell wenn diese aus Kunststoff bestehen, als Gleitlager wirken.

Gemäß einer weiteren vorteilhaften Ausführungsform sind die zwei Lagerstellen außenseitig zum kleinen und zum großen Riemenscheibenabschnitt oder zwischen dem kleinen und dem großen Riemenscheibenabschnitt oder wechselweise die Lagerstellen mit den Riemenscheibenabschnitten koaxial auf der Zwischenachse angeordnet. In Abhängigkeit von der Ausführungsform der Lagerung und des Drehübertragungsgliedes besteht ferner die Möglichkeit, dass die zwei Lagerstellen und die Riemenscheibenabschnitte paarweise zueinander angeordnet sind, wobei die paarweisen Lagerstellen benachbart zu den paarweisen Riemenscheibenabschnitten koaxial auf der Zwischenachse angeordnet werden können. Ferner besteht die Möglichkeit, dass die Lageranordnung in Richtung der Zwischenachse axial schwimmend ausgebildet ist, wobei die axiale Bewegung des Drehübertragungsgliedes möglich ist. Diese kann durch wenigstens eine in einem Axialspalt eingebrachte Anlaufscheibe begrenzt werden. Die axialen Riemenbewegungen müssen in diesem Fall von den anderen Rädern begrenzt werden, was zum Beispiel durch Anlaufscheiben erfolgt. Derart festgelegte Riementriebe halten das Drehübertragungsglied in Position, wenn dieses mit entsprechenden Anlaufscheiben ausgestattet ist. Alternativ kann die axiale Beweglichkeit des Drehübertragungsgliedes eng begrenzt werden. Dafür sind Anschläge bzw. Axiallager notwendig. Die axiale Begrenzung kann kontinuierlich anliegend oder spielbehaftet sowie starr oder mit einer Federkennlinie ausgebildet sein. Für die Einstellung der Konstruktion des Drehübertragungsgliedes auf der Zwischenachse ist ggf. ein axiales Spiel zu den Gehäusewandungen notwendig, so dass kontinuierlich anliegende, starre Begrenzungen eventuell ausscheiden. Vorzugsweise sind jedoch Begrenzungen vorzusehen, die keine Anschlaggeräusche verursachen. Hierfür eignet sich ein entsprechender Werkstoff mit einer eingepassten oder spielbehafteten Einbauweise, welcher jedoch eine Federkennlinie aufweisen sollte, die eine entsprechende Nachgiebigkeit ermöglicht. Daher bieten sich federnde Kunststoff- oder Gummi-Anlaufscheiben, Gewebescheiben wie Filz etc. an. Ferner sind metallische Federscheiben anwendbar, welche eine sehr große Nachgiebigkeit bieten.

Damit wird eine erfindungsgemäße Einstellbarkeit der Zwischenachse in oder am Gehäuse eines Lenkhilfsantriebs geschaffen, wobei die Bewegung der Zwischenachse zur Einstellung der Riemenspannung mindestens einer Getriebestufe erfolgen kann, was durch ein Ziehen der Zwischenwelle in der Gehäusekonstruktion, ein Schwenken einer Teilmenge der Gehäusekonstruktion inklusive der Zwischenwelle oder ein Verdrehen exzentrischer Komponenten, zum Beispiel Komponenten, die in der Gehäusekonstruktion und/oder in der Wellenlagerung und/oder in der Wellenbefestigung vorgesehen sind, erfolgt.

Für eine gleichzeitige Einstellung von zwei oder mehreren Riemenstufen muss die Zwischenachse ihre Position finden können und darf in ihrer Beweglichkeit nicht auf einer bestimmten Bahn fixiert sein. Deswegen ist für eine solche Einstellung vorzugsweise ein Ziehprozess mit vollumfänglichem Freiheitsgrad der Zwischenachse anzuwenden. Dieser Freiheitsgrad wird dadurch geschaffen, dass das Aufnahmemittel einen Gehäusedurchgangsabschnitt umfasst, welcher sich durch einen Durchgang in der Wandung des Gehäuses erstreckt, wobei der Gehäusedurchgangsabschnitt einen kleineren Durchmesser als der Durchgang im Gehäuse aufweist, so dass das gebildete Radialspiel die parallel zur Zwischenachse versetzbare Anordnung des Aufnahmemittels am Gehäuse ermöglicht.

Zum Sichern der Einstellung durch beidseitiges axiales Verspannen, vorzugsweise durch ein Verschrauben, sind Formelemente zum Aufbringen des Gegenmomentes notwendig, welche im Aufnahmemittel beispielsweise in Form eines Innenvielkants, eines Außenvielkants, eines Zwei-Flach, einer Innenverzahnung, einer Außenverzahnung etc. ausgebildet sein kann. Alternativ können sich die beiden Schraubelemente auch gegenseitig kontern.

Weitere, die Erfindung verbessernde Maßnahmen werden nachstehend gemeinsam mit der Beschreibung bevorzugter Ausführungsbeispiele der Erfindung anhand der Figuren näher dargestellt. Es zeigt:
- Figur 1: eine schematische Ansicht eines Lenkhilfsantriebs, wobei die Anordnung der Motorachse, der Abtriebsachse sowie der Zwischenachse dargestellt ist;
- Figur 2: eine quergeschnittene Seitenansicht eines ersten Ausführungsbeispiels eines einteilig ausgeführtem Drehübertragungsgliedes, zweiseitig gelagert auf einem als Achse ausgeführtem Aufnahmemittel, welches einseitig mittels eines Fixiermittels an einem Gehäuse befestigt ist;
- Figur 3: ein weiteres Ausführungsbeispiel eines mehrteilig ausgeführtem Drehübertragungsgliedes mit einer einseitigen Lagerung in einem als Lagerhülse ausgeführtem Aufnahmemittel, welches mittels eines Fixiermittels an einem Gehäuse befestigt ist;
- Figur 4: das erste Ausführungsbeispiel des Drehübertragungsgliedes gemäß der Figur 2, jedoch mit einer zweiseitigen Befestigung am Gehäuse mittels eines Fixiermittels;
- Figur 5: das zweite Ausführungsbeispiel des Drehübertragungsgliedes gemäß der Figur 3, jedoch mit zweiseitigen Lagerung in einem als Lagerhülse ausgeführtem Aufnahmemittel, welches mittels eines Fixiermittels an einem Gehäuse befestigt ist;
- Figur 6: eine quergeschnittene Seitenansicht der Befestigung des zweiteilig ausgeführtem Achselementes im Gehäuse mittels zweier FixiermittelKonterelemente; Die aufgebrachte Buchse dient der zweiseitigen Befestigung sowie dem Ausgleich axialer Toleranzen und der Ermöglichung der Einstellbarkeit in einem geschlossenem Gehäuse;
- Figur 7A: eine Anordnung einer Lagerhülse im Gehäuse mit einem Axialspiel;
- Figur 7B: die Anordnung einer Lagerhülse im Gehäuse gemäß der Figur 7A, wobei zwischen dem Drehübertragungsglied und der Lagerhülse eine Anlaufscheibe vorgesehen ist;
- Figur 8: ein Ausführungsbeispiel eines mehrteiligem Drehübertragungsgliedes, welches mittels einer schwimmenden Lageranordnung auf dem Achselement drehbar aufgenommen ist;
- Figur 9: das Ausführungsbeispiel des Drehübertragungsgliedes gemäß der Figur 6 und 8, wobei auf dem Achselement das Drehübertragunsglied schwimmend gelagert ist und durch axiale Anlaufscheiben zw. Drehübertragungsglied und Aufnahmemittel in der axialen Beweglichkeit begrenzt ist;
- Figur 10: eine weitere Ansicht der Ausführungsform des Drehübertragungsgliedes als Welle gemäß Figur 5, wobei die Welle schwimmend gelagert ist und durch axiale Anlaufscheiben zw. Drehübertragungsglied und Aufnahmemittel in der axialen Beweglichkeit begrenzt ist.
- Figur 11: mögliche Ausführungsformen der Anordnung des Drehübertragungsgliedes sowie der Lageranordnung auf der Zwischenachse.

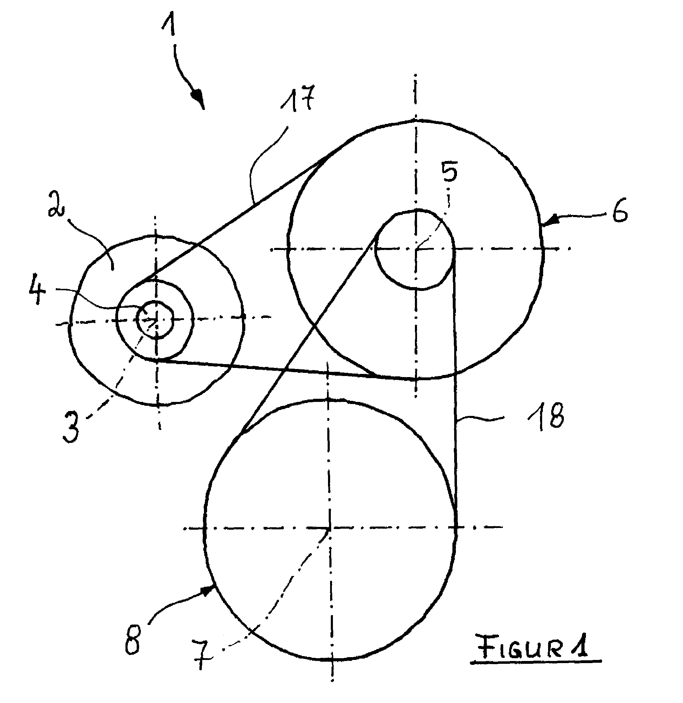

In Figur 1 ist ein Lenkhilfsantrieb 1 schematisch dargestellt, um die Anordnung der einzelnen Achsen zueinander zu verdeutlichen. Der Lenkhilfsantrieb 1 wird durch den Motor 2 angetrieben, wobei sich eine Motorwelle 4 aus dem Motor 2 in Richtung einer Motorachse 3 heraus erstreckt. Auf der Motorwelle 4 ist eine Riemenscheibe angeordnet, um ein erstes Zugmittel 17 in Gestalt eines Zahnriemens anzutreiben, welcher mit einem Drehübertragungsglied 6 verbunden ist. Das Drehübertragungsglied 6 wird rotierend um eine Zwischenachse 5 angetrieben, wobei das Zugmittel 17 mit einer Riemenscheibe gekoppelt ist, die um die Motorachse 3 rotiert und einen großen Durchmesser aufweist, und das Drehübertragungsglied 6 ferner eine Riemenscheibe umfasst, welche einen kleineren Durchmesser umfasst. Um die Riemenscheibe mit dem kleineren Durchmesser ist ein weiteres Zugmittel 18 aufgenommen, welches eine Abtriebswelle 8 drehbeweglich um eine Abtriebsachse 7 antreibt, wobei die Zugmittel 17 und 18 beispielhaft als Zahnriemen ausgeführt sind. Damit wird das Untersetzungsverhältnis von der Drehzahl der Motorwelle 4 auf die Abtriebswelle 8 erhöht, wobei gemäß der Darstellung ein Lenkhilfsantrieb 1 mit einem einzigen Drehübertragungsglied 6 dargestellt ist, wobei sich die Erfindung ferner auch über Lenkhilfsantriebe 1 erstreckt, die mehr als ein Drehübertragungsglied 6 in serieller Kopplung mehrer Riementriebe umfasst.

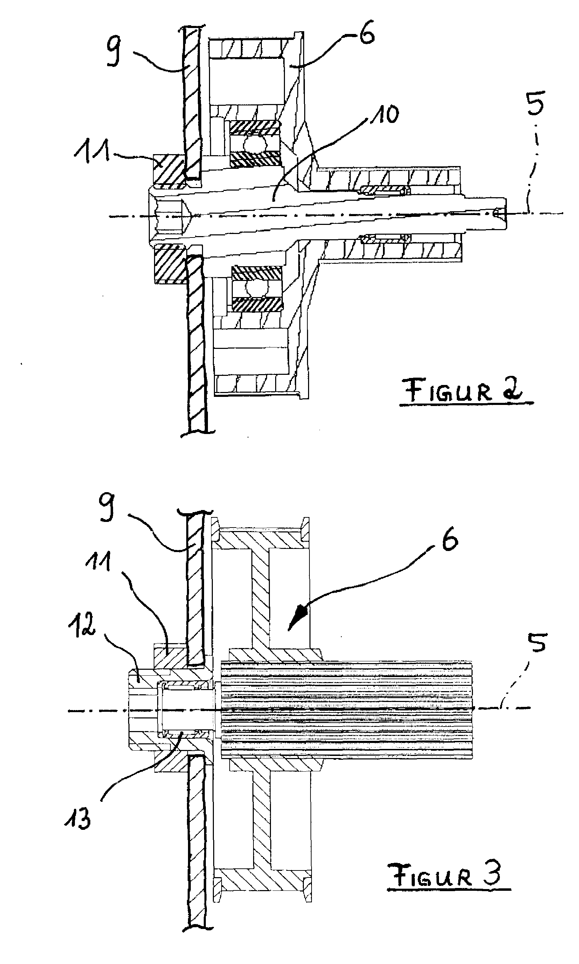

Figur 2 zeigt eine quergeschnittene Seitenansicht der Anordnung des Drehübertragungsgliedes 6 in bzw. am Gehäuse 9 des Lenkhilfsantriebs. Das Drehübertragungsglied 6 weist einen Abschnitt mit einer großen Riemenscheibe und einen Abschnitt mit einer kleinen Riemenscheibe auf, wobei das Drehübertragungsglied 6 als einteiliges Doppelriemenrad ausgebildet ist, durch welches sich ein Achselement 10 hindurch erstreckt. Das Achselement 10 weist mehrere Durchmessersprünge auf, wobei zur drehbeweglichen Aufnahme des Drehübertragungsgliedes 6 auf dem Achselement 10 sowohl ein Wälzlager im Bereich der Riemenscheibe mit dem großen Durchmesser und ein Zylinderrollenlager bzw. ein Nadellager im Bereich der kleinen Riemenscheibe angeordnet ist. Auch ist ein Wälzlager in die Aufnahme und die Riemenscheibe in Form von eingeschliffenen Lagerlaufbahnen integrierbar. Schließlich ist auch die Ausgestaltung als Gleitlager denkbar und durch Integration in z.B. die Riemenscheibe möglich.

Zur Befestigung des Achselementes 10 im Gehäuse 9 weist dieses einen Abschnitt auf, welcher sich durch eine Öffnung im Gehäuse 9 hindurch erstreckt. Das als Aufnahmemittel ausgebildete Achselement 10 bildet daher einen Gehäusedurchgangsabschnitt, welcher sich durch einen Durchgang in der Wandung des Gehäuses 9 erstreckt, und wobei der Gehäusedurchgangsabschnitt einen kleineren Durchmesser als der Durchgang im Gehäuse 9 aufweist, so dass das gebildete Radialspiel die parallel zur Zwischenachse 5 versetzbare Anordnung des Achselementes 10 im Gehäuse 9 ermöglicht. Durch die Durchmesserdifferenz zwischen dem Durchgang im Gehäuse 9 und dem Gehäusedurchgangsabschnitt im Achselement ist innerhalb der Radialebene des Gehäuses 9 eine Bewegung des Achselementes 10 im Sinne einer parallelen Verlagerung der Zwischenachse 5 möglich. Damit kann die Position der Zwischenachse 5 relativ zur Motorachse und auch relativ zur Abtriebsachse verändert werden, so dass die jeweiligen Riemen die optimale Riemenvorspannung erhalten können. Zum endgültigen Befestigen des Achselementes 10 im Gehäuse 9 ist ein Konterelement 11 vorgesehen, welches auf einen Gewindeabschnitt des Achselementes 10 aufschraubbar ist, der sich aus dem Gehäuse 9 heraus erstreckt. Somit ist das Konterelement 11 von der Außenseite des Gehäuses 9 bedienbar, und das Achselement 10 kann in der Wandung des Gehäuses 9 befestigt werden. Um das Konterelement 11 mit dem Achselement 10 zu kontern, weist dieses einen Innensechskant in Richtung der Zwischenachse 5 auf, welcher als Geometrie für einen Steckschlüsseleinsatz dient, um außenseitig vom Gehäuse 9 ein Kontermoment in das Achselement 10 einzuleiten.

Figur 3 zeigt eine weitere Ausführungsform des Drehübertragungsgliedes 6, welches als mehrteilige Welle ausgebildet ist, wobei das Aufnahmemittel zur Aufnahme des wellenartigen Drehübertragungsgliedes 6 eine Lagerhülse 12 aufweist, welche mittels des Konterelementes 11 im Gehäuse 9 befestigbar ist. Das Drehübertragungsglied 6 weist gemäß dieses Ausführungsbeispiels eine zapfenartige Anformung in Richtung der Zwischenachse 5 auf, so dass zwischen der zapfenartigen Anformung und der Lagerhülse 12 eine Lageranordnung 13 eingebracht werden kann. Gemäß dieses Ausführungsbeispiels ist lediglich das Aufnahmemittel in Form einer Lagerhülse 12 ausgebildet, welche wiederum einen kleineren Durchmesser aufweist als der Durchgang im Gehäuse 9, um eine Beweglichkeit innerhalb der Radialebene der jeweiligen Durchgänge zu ermöglichen, und um eine achsparallele Versetzung der Zwischenachse 5 zu schaffen.

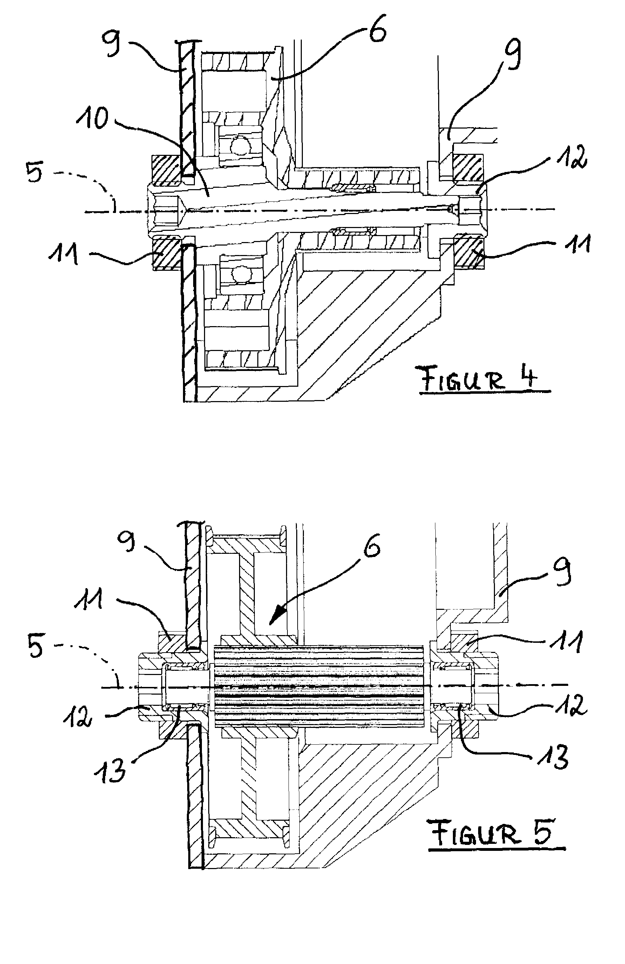

Die Figuren 4 und 5 zeigen weitere Ausführungsbeispiele der Anordnung des Drehübertragungsgliedes 6 innerhalb des Gehäuses 9 auf. Figur 4 zeigt die Anordnung des Drehübertragungsgliedes 6 gemäß der Figur 2, wobei neben einer in der Bildebene linksseitigen Befestigung des Drehübertragungsgliedes 6 mittels eines ersten Fixierelements, welches im vorliegenden Ausführungsbeispiel als geschraubtes Konterelementes 11 ausgeführt ist, auf der in der Bildebene rechten Seite ein weiteres Konterelement 11 vorgesehen ist, welches das Achselement 10 ebenfalls am Gehäuse 9 befestigt. Während die linksseitige Befestigung im Gehäuse 9 mittels des Konterelementes 11 auf die bereits in der Figur 2 beschriebene Weise erfolgt, wird eine rechtsseitige Befestigung mittels einer Lagerhülse 12 vorgesehen, welche wiederum mit einem Konterelement 11 in der Wandung des Gehäuses 9 befestigt werden kann. Die Lagerhülse 12 nimmt einen endseitigen Abschnitt des Achselementes 10 auf, wobei die Aufnahme einer Axialbeweglichkeit in einer Richtung der Zwischenachse 5 zulässt, um eine Verspannung der beiden Wandungen des Gehäuses 9 zu verhindern. Daher wird für eine Montage zunächst das linksseitige Konterelement 11 mit dem Achselement 10 verspannt, während sich die Lagerhülse 12 in dem mit einem größeren Durchmesser versehenden Durchgang im Gehäuse 9 weiter verschieben kann. Erst nach Einstellung der Riemenspannung, wenn das Achselement 10 im Gehäuse 9 in der Radialebene durch die Verspannung des linksseitigen Konterelementes 11 mit dem Achselement 10 die endgültige Position erlangt hat, wird nachfolgend die Lagerhülse 12 auf der rechten Seite im Gehäuse 9 mittels des Konterelementes 11 verspannt.

In Figur 5 erfolgt die Montage des Drehübertragungsgliedes 6 auf gleiche Weise, wobei die Lagerung des Drehübertragungsgliedes 6 mittels zweier angeformter Zapfen ermöglicht ist, welche sich in jeweilige Lagerhülsen 12 hinein erstrecken, so dass eine Lageranordnung 13 innerhalb der Lagerhülsen 12 aufnehmbar ist. Sowohl die linksseitige Lagerhülse 12 als auch die in der Bildebene rechtsseitig dargestellte Lagerhülse 12 wird mittels eines separat zugeordneten Konterelementes 11 verspannt, wobei auch hier die Verspannung nacheinander erfolgen kann. Wird als Lagerung 13 eine Pendellagerung eingesetzt, so kann diese Fluchtungsfehler innerhalb der Zwischenachse 5 ausgleichen. Das Drehübertragungsglied 6 besteht aus einem zylinderförmigen inneren Teil, welcher einen äußeren Teil mit einem größeren Durchmesser aufnimmt, der die Riemenscheibe bildet. Daher ist die kleine Riemenscheibe durch das zylinderförmige Element selbst gebildet, wobei die größere Riemenscheibe auf dieser aufgenommen ist.

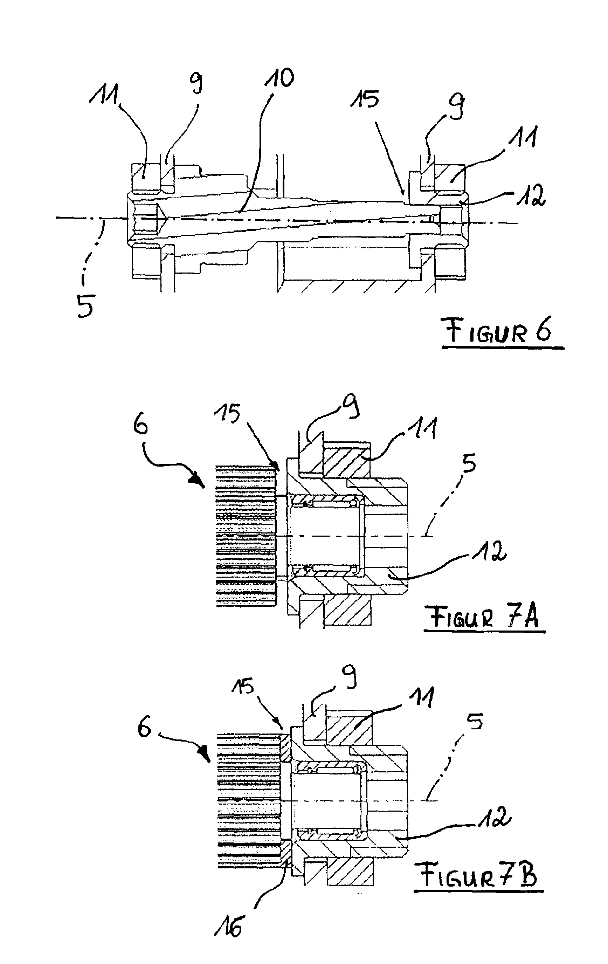

In der Figur 6 ist eine Aufnahme eines als Achselement ausgeführten Aufnahmemittels innerhalb des Gehäuses 9 dargestellt, wobei die Anordnung sowohl in einem linksseitigen als auch in einem rechtsseitigen jeweiligen Abschnitt der Gehäusewandung 9 erfolgt. Gemäß der obenstehend beschriebenen Montage wird zunächst das linksseitig dargestellte Konterelement 11 mit dem Achselement 10 derart verspannt, dass das Achselement 10 im Gehäuse 9 linksseitig fest angeordnet ist. Anschließend wird die Lagerhülse 12 in der rechten Bildseite mit dem zugeordneten Konterelement 11 im Gehäuse 9 verspannt, so dass sich ein Axialspalt 15 zwischen der Lagerhülse 12 und dem Achselement 10 bzw. einem zugeordneten Durchmesserabschnitt bildet. Dieses Axialspiel verdeutlicht, dass das Achselement 10 innerhalb der Lagerhülse 12 in Richtung der Zwischenachse 5 beweglich aufgenommen ist.

In den Figuren 7A und 7B ist eine vergrößerte Darstellung der rechtsseitigen Aufnahme des Drehübertragungsgliedes 6 im Gehäuse 9 dargestellt. Um den Axialspalt 15 in Richtung der Zwischenachse 5 auszugleichen, ist dieser zunächst in Figur 7A ohne eine Anlaufscheibe 16 dargestellt, wobei Figur 7B eine Anlaufscheibe 16 dargestellt ist, welche im Axialspalt 15 eingesetzt ist. Die Anlaufscheibe 16 kann eine hohe Nachgiebigkeit aufweisen oder zumindest aus einem Material gebildet sein, welches eine entsprechend flache Federkennlinie aufweist. Damit ist eine axiale Fixierung des Drehübertragungsgliedes 6 in Richtung der Zwischenachse 5 geschaffen, was einen genauen Lauf des Riementriebes ermöglicht.

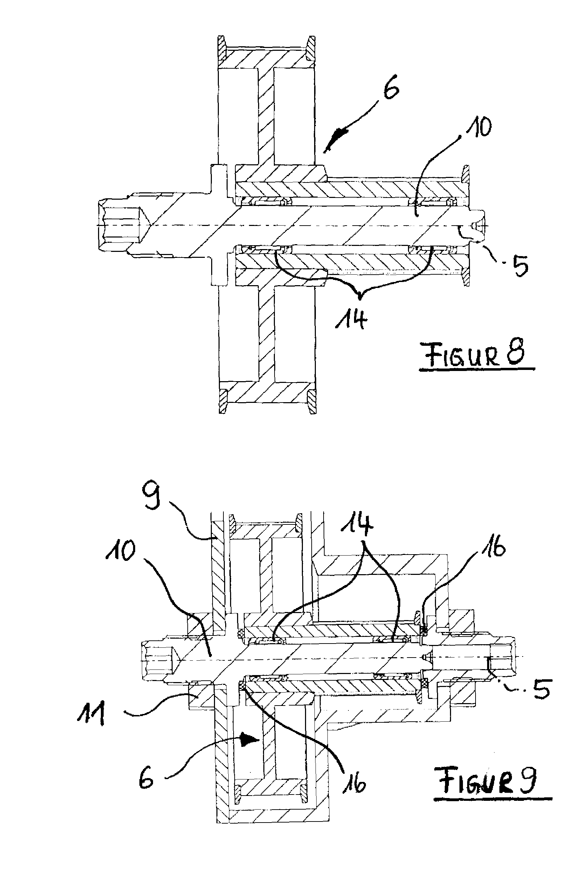

In Figur 8 ist eine mögliche Lageranordnung 14 dargestellt, um das Drehübertragungsglied 6 drehbeweglich auf dem Achselement 10 aufzunehmen. Die Lagerung ist als eine schwimmende Lagerung ausgebildet, so dass sowohl das linksseitige als auch das rechtsseitige Lager der Lageranordnung 14 ein Nadellager oder ein Zylinderrollenlager ist, um eine axiale Bewegung des Drehübertragungsgliedes 6 in Richtung der Zwischenachse 5 zu ermöglichen. Die Riemenscheibenabschnitte weisen seitliche Anlaufkonturen auf, so dass der Riemen nicht von der jeweiligen kleinen oder großen Riemenscheibe herunterlaufen kann.

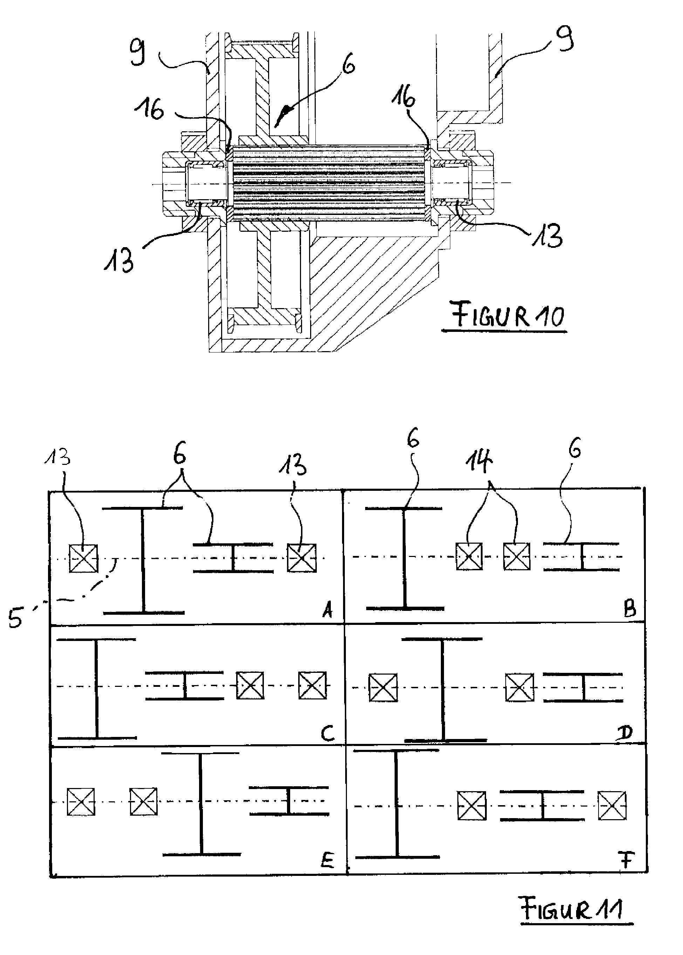

Figur 9 und Figur 10 zeigen eine bevorzugte Ausführungsform der drehbeweglichen Aufnahme des Drehübertragungsgliedes 6, wobei sowohl eine rechtsseitige als auch eine linksseitige Anlaufscheibe 16 vorgesehen ist. Diese dienen als Begrenzungen, die keine Anschlaggeräusche verursachen, welche entweder einen kontinuierlichen Anlauf bilden oder spielbehaftet sind, wobei das Material der Anlaufscheibe 16 eine Federkennlinie oder einen entsprechenden Werkstoff umfasst.

Figur 11 zeigt schematisch eine Übersicht verschiedener Anordnungen des Drehübertragungsgliedes 6 relativ zur Lageranordnung 13, wobei sich sowohl das Drehübertragungsglied 6 als auch die Lageranordnung 13 mit jeweils zwei Lagerstellen konzentrisch zur Zwischenachse 5 erstreckt. Figur 11A zeigt eine Anordnung, wie diese in den vorhergehenden Figuren bereits dargestellt ist, so dass sich das Drehübertragungsglied 6 sowohl mit der großen als auch mit der kleinen Riemenscheibe zwischen den beiden Lagerstellen der Lageranordnung 13 befindet. Figur 11B gibt eine alternative Anordnung vor, in der die Lageranordnung 14 zwischen der großen Riemenscheibe und der kleinen Riemenscheibe des Drehübertragungsgliedes 6 angeordnet ist. In Figur 11C ist eine einseitig vorgesehene Lageranordnung dargestellt, so dass das Drehübertragungsglied mit der großen und kleinen Riemenscheibe fliegend gelagert ist. Figur 11D zeigt eine Lageranordnung, wobei die beiden Lagerstellen linksseitig sowie rechtsseitig von der großen Riemenscheibe vorgesehen sind, so dass sich lediglich die kleine Riemenscheibe in einer fliegenden Anordnung um die Zwischenachse 5 herum erstreckt. Figur 11 E zeigt eine spiegelbildlich vorgesehene Anordnung gemäß der Figur 11C, wobei die beiden Lagerstellen der Lageranordnung linksseitig das Drehübertragungsglied innerhalb des Gehäuses befestigen, so dass sowohl die Lagerstellen der Lageranordnung als auch die Riemenscheiben des Drehübertragungsgliedes jeweils paarweise benachbart zueinander angeordnet sind. In Figur 11F ist eine abwechselnde Anordnung vorgesehen, so dass zunächst die große Riemenscheibe mit einer ersten Lagerstelle und die zweite kleinere Riemenscheibe mit einer zweiten Lagerstelle abwechselnd entlang der Zwischenachse 5 angeordnet ist.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht.

### Bezugszeichenliste

- 1: Lenkhilfsantrieb
- 2: Motor
- 3: Motorachse
- 4: Motorwelle
- 5: Zwischenachse
- **6**: Drehübertragungsglied
- 7: Abtriebsachse
- 8: Abtriebswelle
- 9: Gehäuse
- 10: Achselement
- 11: Konterelement
- 12: Lagerhülse
- 13: Lageranordnung
- 14: Lageranordnung
- 15: Axialspalt
- 16: Anlaufscheibe
- 17: Zugmittel
- 18: Zugmittel

## Patentansprüche

1. Lenkhilfsantrieb (1) für eine Lenkeinrichtung eines Kraftfahrzeugs mit einem Motor (2), der eine Motorwelle (4) antreibt, die mit wenigstens einem Drehübertragungsglied (6) antreibend gekoppelt ist, wobei dieses mit einer Abtriebswelle (8) antreibend gekoppelt ist und wobei das Drehübertragungsglied (6) in einem Gehäuse (9) des Lenkhilfsantriebes (1) aufgenommen ist,
**dadurch gekennzeichnet, dass** ein als mehrstufiges Zugmittelgetriebe, vorzugsweise ein als zweistufiges Zahnriemengetriebe ausgebildetes Riemengetriebe, zur Kopplung zwischen der Motorwelle (4) und dem Drehübertragungsglied (6) und zwischen diesem und der Abtriebswelle (8) vorgesehen ist, und dass zur Aufnahme des Drehübertragungsgliedes (6) im Gehäuse (9) wenigstens ein konzentrisch zu einer Zwischenachse (5) angeordnetes Aufnahmemittel mit einem gehäuseaußenseitig bedienbaren Fixierelement (11) vorgesehen ist, mittels dessen das Drehübertragungsglied (6) in wenigstens einer parallel zur Zwischenachse (5) versetzbaren Position am Gehäuse (9) einstellbar bzw. befestigbar ist.

2. Lenkhilfsantrieb (1) nach Anspruch 1,
**dadurch gekennzeichnet, dass** die Motorachse (3), die dazu achsparallel angeordnete Zwischenachse (5) und die Abtriebsachse (7) in einer Dreiecksposition zueinander angeordnet sind, sodass mit der versetzbaren Position des Aufnahmemittels zur Aufnahme des Drehübertragungsgliedes (6) am Gehäuse (9) eine Entfernungsänderung der Zwischenachse (5) sowohl zur Motorachse (3) als auch zur Abtriebsachse (7) ermöglicht ist.

3. Lenkhilfsantrieb (1) nach Anspruch 1 oder 2, **dadurch gekennzeichnet, dass** das Drehübertragungsglied (6) ein- oder zweiseitig mittels eines Aufnahmemittels drehbar gelagert ist.

4. Lenkhilfsantrieb (1) nach einem der vorgenannten Ansprüche,
**dadurch gekennzeichnet, dass** das Aufnahmemittel als Achselement (10) ausgeführt ist, welches mittels eines Fixierlementes ein- oder zweiseitig gehäusefest festgelegt wird, wobei das Drehübertragungsglied (6) drehbar gelagert auf dem Achselement (10) aufgenommen ist.

5. Lenkhilfsantrieb (1) nach einem der vorgenannten Ansprüche,
**dadurch gekennzeichnet, dass** das Drehübertragungsglied (6) als Doppelriemenrad ausgebildet ist, durch welches sich das Achselement (10) mindestens teilweise hindurch erstreckt, und dass die antreibende Kopplung des Drehübertragungsgliedes (6) sowohl zur Motorwelle (4) als auch zur Abtriebswelle (8) einen Riementrieb aufweist.

6. Lenkhilfsantrieb (1) nach Anspruch 4 oder 5, **dadurch gekennzeichnet, dass** das Achselement zum Ausgleich axialer Toleranzen mehrteilig ausgebildet ist.

7. Lenkhilfsantrieb (1) nach einem der Ansprüche 1 bis 3,
**dadurch gekennzeichnet, dass** das Aufnahmemittel als ein gehäusefestes Lager oder als eine Lagerhülse (12) ausgeführt ist, welche für eine gehäusefeste Anordnung mittels eines Fixierelements fest mit dem Gehäuse verbunden ist.

8. Lenkhilfsantrieb (1) nach Anspruch 7,
**dadurch gekennzeichnet, dass** das Drehübertragungsglied (6) wenigstens eine Anformung zur Bildung einer Lageranordnung (13) zur Lagerung in einem gehäusefesten Lager oder in einer Lagerhülse (12) aufweist.

9. Lenkhilfsantrieb (1) nach einem der vorgenannten Ansprüche,
**dadurch gekennzeichnet, dass** das Aufnahmemittel einen Gehäusedurchgangsabschnitt umfasst, welcher sich durch einen Durchgang in der Wandung des Gehäuses (9) erstreckt, wobei der Gehäusedurchgangsabschnitt einen kleineren Durchmesser als der Durchgang im Gehäuse (9) aufweist, sodass das gebildete Radialspiel die parallel zur Zwischenachse (5) versetzbare Anordnung des Aufnahmemittels am Gehäuse (9) ermöglicht.

10. Lenkhilfsantrieb (1) nach einen der Ansprüche 1 oder 2,
**dadurch gekennzeichnet, dass** das Aufnahmemittel als Teil des Gehäuses (9) ausgebildet ist, mittels dessen das Drehübertragungsglied (6) in wenigstens einer parallel zur Zwischenachse (5) versetzbaren Position am restlichen Gehäuse (9), welches wenigstens den Motor (2) und die Abtriebswelle (7) aufnimmt, befestigbar ist.

11. Lenkhilfsantrieb (1) nach einem der vorgenannten Ansprüche,
**dadurch gekennzeichnet, dass** das Doppelriemenrad, welches das Drehübertragungsglied (6) bildet, einen kleinen Riemenscheibenabschnitt und einen großen Riemenscheibenabschnitt aufweist, wobei der große Riemenscheibenabschnitt als Kunststoffteil ausgebildet ist und mittels eines Spritzgussverfahrens auf den als Metallbauteil ausgebildeten kleinen Riemenscheibenabschnitt aufgebracht ist.

12. Lenkhilfsantrieb (1) nach einem der Ansprüche 2 bis 11,
**dadurch gekennzeichnet, dass** das Drehübertragungsglied mittels einer Lageranordnung (14) drehbar gelagert ist, welche zwei Lagerstellen aufweist, die als Festlager/Loslager-Kombination oder als zwei Loslager (schwimmende Anordnung) oder als zwei Stützlager ausgeführt sind, wobei Elemente der Lagerung in das Aufnahmeelement und/oder das Doppelriemenrad integriert sein können.

13. Lenkhilfsantrieb (1) nach Anspruch 12,
**dadurch gekennzeichnet, dass** die zwei Lagerstellen außenseitig zum kleinen und großen Riemenscheibenabschnitt oder zwischen dem kleinen und dem großen Riemenscheibenabschnitt oder wechselweise die Lagerstellen mit den Riemenscheibenabschnitten koaxial auf der Zwischenachse (5) angeordnet sind.

14. Lenkhilfsantrieb (1) nach Anspruch 12,
**dadurch gekennzeichnet, dass** die zwei Lagerstellen und die Riemenscheibenabschnitte paarweise zueinander angeordnet sind, wobei die paarweisen Lagerstellen benachbart zu den paarweisen Riemenscheibenabschnitten koaxial auf der Zwischenachse (5) angeordnet sind.

15. Lenkhilfsantrieb (1) nach einem der Ansprüche 12 bis 14,
**dadurch gekennzeichnet, dass** die Lageranordnung (14) in Richtung der Zwischenachse (5) axial schwimmend ausgebildet ist, wobei die axiale Bewegung des Drehübertragungsgliedes (6) entweder durch wenigstens eine in einem Axialspalt (15) eingebrachte Anlaufscheibe (16) begrenzt ist, oder durch wenigstens einen Riemen begrenzt ist, wobei die axiale Bewegung des Riemens wiederum durch Anlaufscheiben auf den Riemenrädern festgelegt ist.
